# EUROPÄISCHE PATENTSCHRIFT

(11) **EP 0 522 376 B1**
(45) Veröffentlichungstag und Bekanntmachung des Hinweises auf die Patenterteilung: **13.03.1996**
(21) Anmeldenummer: 92110875.9
(22) Anmeldetag: 26.06.1992
(51) Int. Cl.: C08F 8/14, C08F 299/00

(54) **Verfahren zur Herstellung von Polyalkylmethacrylat-Macromonomeren**
Process for the manufacture of polyalkylmethacrylate-macromonomers
Procédé de préparation de macromonomères de polyméthacrylate d'alcoyle

(30) Priorität: 02.07.1991 DE 4121811
(43) Veröffentlichungstag der Anmeldung: 13.01.1993
(73) Patentinhaber: RÖHM GMBH, D-64293 Darmstadt (DE)
(72) Erfinder: Kerscher, Volker, Dr., W-6107 Reinheim (DE); Siol, Werner, Dr., W-6100 Darmstadt-Eberstadt (DE)

(56) Entgegenhaltungen:
- EP-A- 0 248 574
- EP-A- 0 287 019
- EP-A- 0 291 662
- EP-A- 0 357 036
- FR-A- 2 096 023
- FR-A- 2 352 008

## Beschreibung

### Stand der Technik

Makromonomere stellen definitionsgemäß Polymere mit einer polymerisationsfähigen, insbesondere einer radikalisch polymerisationsfähigen Endgruppe, im Molekulargewichtsbereich 500 bis ca. 100 000, insbesondere im Bereich 2 000 bis 50 000 dar.

Die Herstellung von Makromonomeren wird in der Literatur eingehend beschrieben (P.F. Rempp. E. Franta, Adv. Polym. Sci. 58, 1 (1984); K. Albrecht, W. Wunderlich, Angew. Makromol. Chem. 145/146, 89 - 100 (1986); H. Mark et al. Encyclopedia of Polymer Science & Technology, 2nd Ed. Vol. 9, 195 - 204, J. Wiley & Sons 1987; P. Rempp, E. Franta, P. Masson and P. Lutz, Progr. Colloid & Polymer Sci. 72, 112 - 118 (1986)); P. Rempp et al., Makromol. Chem., Rapid Commun. 3, 499 - 504 (1982); T. Corner, Advances in Polymer Acience 62, 95 - 141 (1984), Paul F. Rempp and Emile Franta, Advances in Polymer Science 58, 1 - 50 (1984); Yves Gnanou, Pierre Lutz, Makromol. Chem. 190, 577 - 588 (1989), Y. Tsukahara et al., Macromolecules 22, 1546 - 1552 (1989), Y. Tsukahara et al., Polym. J. 21, 377 - 391 (1989), DE-P 27 23 905.

Makromonomere sind bekanntlich über anionische und kationische "Living polymerization" und über radikalische Polymerisation zugänglich, wobei die polymerisationsfähige Endgruppe gewöhnlich bei Initiierung oder beim Kettenabbruch eingeführt wird, bzw. durch eine nachfolgende chemische Umsetzung.

Eine weitere interessante Möglichkeit zur Herstellung der Makromonomeren bietet das Verfahren der "Group Transfer Polymerization" (GTP; vgl. H.F. Mark et al., Encyclopedia of Polymer Science and Technology, 2nd. Ed. Vol. 7, 580 - 588, J. Wiley & Sons 1987).

Die Bestimmung der Molekulargewichte geschieht durch Gelpermeationschromatographie (vgl. H.F. Mark et al., Encyclopedia of Polymer Science and Technology 2nd Ed. Vol. 10, 1 - 19, D. Wiley & Sons, 1987).

Die Bestimmung der Glastemperatur Tg wird nach E.A. Turi, Thermal Characterization of Polymeric Materials, Academic Press, New York 1981 bzw. Vieweg-Esser, Kunststoff-Handbuch Vol., IX, Polymethacrylate, pp. 333 - 340, Carl Hanser Verlag 1975, vorgenommen.

In der DE-A 39 02 653 werden Elastomere auf Acrylatbasis beschrieben, die zu mindestens 40 und bis zu 100 Gew.-% aus einem oder mehreren Copolymerisaten mit einem Molekulargewicht größer als 50 000 Dalton, aufgebaut aus Acrylatomonomeren zu 50 - 95 Gew.-% und Makromonomeren, bestehend aus einer vinylischen Gruppe und damit kovalent verbunden, einer Polyvinyleinheit, ausgewählt aus der Gruppe der Acrylate und Methacrylate und der gegebenenfalls substituierten Styrole mit einer Glastemperatur Tg von mindestens 60 Grad C, und einem Molekulargewicht von 500 bis 100 000 Dalton, bestehen.

Ein Verfahren zur Herstellung von Kammpolymeren wird in EP-Application 357 036 beschrieben. Ebenso sind Pfropfpolymere mit Kammstruktur in DE-P27 23 905 mit sehr enger Molekulargewichtsverteilung der Monomeren dargestellt.

### Aufgabe und Lösung

Die Herstellungsverfahren für Makromonomere wie sie dem Stand der Technik entnommen werden können, führen in der Regel nach einsichtigen chemischen Mechanismen zunächst zu Produkten, mit reaktiven bzw. aktivierbaren Gruppen, die gegebenenfalls in Anlehnung an übliche organische Umsetzungen chemisch modifiziert werden können (und somit die eigentlichen Makromonomeren bilden). Die vorhandene Variationsbreite wird primär durch die Natur der reaktiven bzw. aktivierbaren Gruppen aber auch bis zu einem gewissen Grad durch die Natur der Monomereinheiten im Verband bestimmt. Als eine solche reaktive Gruppe kann z.B. die OH-Gruppe fungieren, die sich mit geeigneten acylierenden Agentien, die polymerisationsfähige Einheiten enthalten, wie z.B. einem Isocyanat-substituierten (Meth)acrylsäurealkylester, oder mit (Meth)acrylsäureanhydrid in eine endständige Monomerfunktion umwandeln läßt.

Die acylierenden Systeme sind - wie aus der organischen Synthese bekannt - relativ reaktiv, verlangen in der Regel eine sorgfältig kontrollierte Reaktionsführung meist in inerten Medien und selbst dann können Nebenreaktionen nicht eindeutig ausgeschlossen werden.

Es bestand daher die Aufgabe nach Wegen zu suchen, auf denen sich Makromonomere in möglichst schonender Art und Weise und mit guten Ausbeuten herstellen ließen. Es wurde nun gefunden, daß sich bestimmte Makromonomer-Typen überraschenderweise nach dem Verfahren der vorliegenden Erfindung äußerst vorteilhaft gewinnen lassen.

Die vorliegende Erfindung betrifft somit ein Verfahren zur Herstellung von Makromonomeren der allgemeinen Formel I 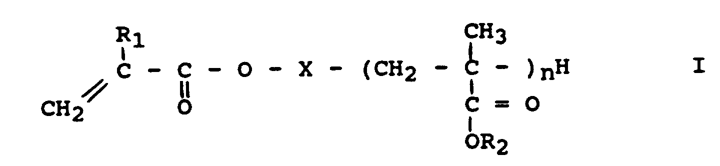 worin
- R₁: für Wasserstoff oder Methyl
- X: für einen biradikalischen Rest und
- R₂: für einen Alkylrest mit 1 bis 40 Kohlenstoffatomen steht, mit der Maßgabe, daß n so gemessen ist, daß das Molekulargewicht der Makromonomeren I im Bereich 500 bis 100 000 Dalton liegt,
wobei man monomere Ester der Formel II 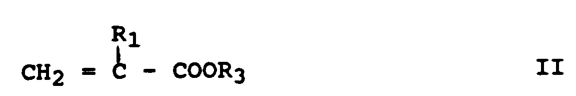 worin
- R₃: für einen Alkylrest mit 1 bis 8 Kohlenstoffatomen steht mit einem hydroxylgruppen-terminierten Polyalkylmethacrylat der Formel III 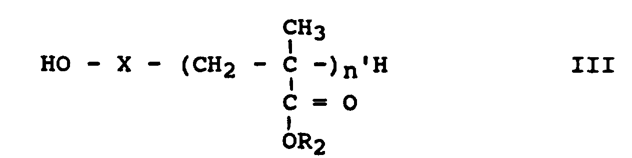
worin
- X u. R₂: die oben bezeichneten Bedeutungen besitzen mit der Maßgabe, daß n'mit n übereinstimmt unter Abspaltung des Alkohols HOR₃
umestert, wobei die Verbindung der Formel I gebildet wird.

Das Ergebnis des vorliegenden Verfahrens ist umso bemerkenswerter als die Estergruppen 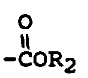 in I bzw. III nicht oder nur in vernachlässigbar geringem Maße angegriffen werden.

Vorzugsweise steht der biradikalische Rest X für eine mindestens zwei- und bis 30-gliedrige Kohlenwasserstoff-Kette, vorzugsweise mit einer -S-Brücke direkt anschließend an den polymeren Teil von I, wobei gegebenenfalls bis 9 Kohlenstoffglieder durch Ethersauerstoff ersetzt sein können. Ferner kann im Rest X die Kette noch durch funktionelle Rest der Formel 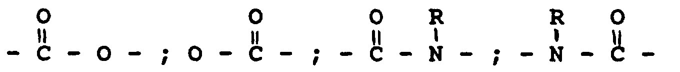 worin R für Wasserstoff oder einen Alkylrest mit 1 - 8 Kohlenstoffatomen steht, oder einen Phenylrest unterbrochen sein.

Die Makromonomeren der Formel I lassen sich in äußerst interessanter Art und Weise zu Kammpolymeren umsetzen.

Eine bevorzugte Verfahrensvariante ist dabei die Copolymerisation der Makromonomeren der Formel I mit (Meth)acrylsäureestern der Formel VI 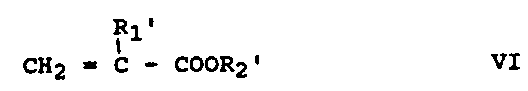 worin R₂' für einen Alkylrest mit 1 bis 40, vorzugsweise 1 - 24 Kohlenstoffatomen und R₁' für Wasserstoff oder Methyl steht, in Gegenwart eines Initiators IN. Die Polymerisation wird als Substanzpolymerisation oder vorgzusweise als Lösungspolymerisation beispielsweise in einem Ester wie Butylacetat durchgeführt. Der Zusatz des Initiators IN geschieht in den an sich üblichen Mengen, vorzugsweise in Portionen bespielsweise insgesamt 0,01 bis 0,5 Gew.-%, insbesondere ca. 0,1 Gew.-% beispielsweise gelöst in einem aliphatischen Lösungsmittel oder in den Monomeren steht.

### A. Herstellung der hydroxylgruppen-terminierten Polyalkylmethacrylate III

Die Herstellung der Polymeren III schließt sich vorteilhaft an radikalische Polymerisationsverfahren des Standes der Technik an (vgl. H. Rauch-Puntigam, Th. Völker, "Acryl- und Methacrylverbindungen", Springer-Verlag, Berlin 1967).

Man kann beispielsweise so vorgehen, daß man die Monomeren der allgemeinen Formel IV 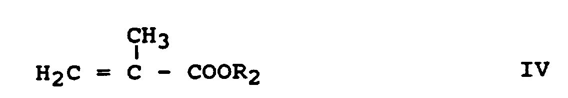 worin R₂ die oben bezeichnete Bedeutung besitzt, in einem üblichen Polymerisations-Reaktor, der mit Rührer, Kühlmantel, Rückflußkühler, Thermometer und Eintropf-Vorrichtung versehen ist, auf eine geeignete Temperatur - als Richtwert sei etwa 90 ± 5 Grad C angegeben - erwärmt, wobei zweckmäßig unter einem Schutzgas wie z.B. Argon, Stickstoff u.ä. gearbeitet wird.

Nach Erreichen der vorbestimmten Temperatur wird ein bifunktionelles Agens HX - OH zugesetzt, dessen Kette X die oben bezeichneten Bedeutungen besitzt und das eine terminale OH-Gruppe enthält, und das somit beispielsweise der Formel V entspricht

HO - X' - SH V

worin X' für einen gegebenenfalls durch eine oder bis zu 9 Ethersauerstoffbrücken unterbrochenen, gegebenenfalls alkylsubstituierten, gegebenenfalls cyclischen Alkylenrest mit 2 bis 20 Kohlenstoffatomen, insbesondere 2 bis 12 Kohlenstoffatomen in der Kette steht, mit der Maßgabe, daß in der Kette mindestens zwei Kohlenstoffatome zwischen jeweils zwei Heteroatomen stehen sollen. Die Alkylsubstituenten sollen dabei 1 - 6 Kohlenstoffatome aufweisen

Die Verbindung der Formel V kann demnach auch sekundäre bzw. cyclische Alkohole bezeichnen. Genannt seien als Verbindungen der Formel V z.B. das 2-Mercaptoethanol, das 3-Mercaptopropanol, das 4-Mercaptobutanol, trans-2-Mercapto-Cyclohexanol.

Nach Zugabe des bifunktionellen, hydroxygruppenhaltigen Agens in Mengen von 0,5 bis 10 Mol.-% bezogen auf die vorgelegte monomere Verbindung der Formel IV bringt man durch Zusatz von Initiatoren IN zweckmäßig gelöst in einer geringen Menge der Monomeren IV in Mengen von 0,001 bis 0,2 Gew.-% bezogen auf die Monomeren, die Polymerisation in Gang.

Als Initiatoren IN setzt man in diesem Fall zweckmäßig solche ein, die innerhalb von 10 Stunden bei Temperaturen von 45 ± 5 Grad C zur Hälfte zerfallen. (Vgl. H.F. Mark et al. Encyclopedia of Polymer Science & Technology, 2nd Ed., Vol. II, pg. 2, J. Wiley & Sons; J. Brandrup, E.H. Immergut, Polymer Handbook 3rd. Ed. II/1. J. Wiley & Sons 1989).

Genannt seien z.B. tert.Butyl-Peracylverbindungen wie tert.Butylperneodecanat, tert.Amylperneodecanoat, tert.Butyl-2,2-diethylperbutyrat u.ä.

In der Regel setzt die Polymerisation umgehend ein, wobei die Temperatur im Reaktor gewöhnlich stark ansteigt, beispielsweise in den Bereich 95 - 98 Grad G gelangt.

Zweckmäßig wartet man ab, bis die Innentemperatur wieder fällt, worauf man vorteilhaft aus zwei verschiedenen Tropftrichtern innerhalb mehrerer Stunden, beispielsweise innerhalb von 4 Stunden einerseits eine weitere Portion des gewählten Initiators IN im Monomeren der Formel IV gelöst und andererseits eine weitere Portion der Verbindung der Formel V zugibt. Die Temperatur wird bei Zugabe zweckmäßig im Bereich 94 - 98 Grad C gehalten, daran anschließend etwa 20 Minuten bei 96 - 98 Grad C.

Anschließend beginnt man die Endpolymerisationsphase, gekennzeichnet durch tropfenweise Zugabe weiteren Initiators IN, vorzugsweise in einem geeigneten Lösungsmittel wie Toluol, innerhalb einiger Stunden, beispielsweise innerhalb 4 Stunden. Abschließend kann man zweckmäßig noch Stabilisatoren zusetzen, beispielsweise vom Typ der sterisch gehinderten Amine (HALS) z.B. das Bis-2,2,6,6-Tetramethyl-4-piperidylsebacat in den üblichen Mengen, etwa 0,01 Gew.-% bezogen auf die Monomeren, vorzugsweise gelöst in einem inerten Lösungsmittel wie Toluol. Anschließend kühlt man auf Raumtemperatur ab und gewinnt das Polymerisat als Feststoff beispielsweise durch Ausfällen mit einem Nicht-Lösemittel wie beispielsweise Methanol.

Alternativ zur Isolierung durch Fällung kann der Feststoff auch durch Entgasung auf dem Extruder gewonnen werden.

Die Herstellung der hydroxylgruppen-terminierten Polyalkylmethacrylate kann aber auch einfach durch langsame Polymerisation in Substanz (z.B. in Hostaphan® Beuteln) mit geringer Konzentration an Initiator (z.B. AIBN) erfolgen (z.B. 96 Stunden bei 50 Grad C). Siehe hierzu DE-A 39 02 653 oder K. Albrecht et al. Makromol. Chem. 145/146, 89 - 100 (1986)).

Auch andere Formen der Polymerisation, z.B. eine Lösungspolymerisation ist möglich, wobei in aller Regel darauf geachtet wird, daß das Verhältnis von eingesetztem Initiator zu eingesetzem Regler im Bereich 1 : 10 bis 1 : 10 000 (bevorzugt 1 : 20 bis 1 : 1 000) liegt (Gewichtsteile).

### B. Herstellung der Methacryloyl-terminierten Makromonomere der Formel I

Vorteilhaft verwendet man zur Herstellung der Makromonomeren der Formel I einen Rundkolben, ausgestattet mit Rührer, Thermometer, Rückflußkühler mit Wasserabscheider und Siedekapillare zum Einleiten getrockneter Luft.

In dieser Apparatur löst man die vorbestimmte Menge an der Verbindung der Formel III in einer hinreichenden Menge des Monomeren der Formel II.

Während nach der Reaktionsgleichung äquimolare Mengen der Reaktanden miteinander reagieren, empfiehlt sich unter praktischen Gesichtspunkten die Anwendung eines Überschusses an den Monomeren der Formel II, der vom 1,5-fachen bis zum 1 000-fachen molaren Überschuß reichen kann. Verwendet man nur geringe molare Überschüsse an Monomeren der Formel II empfiehlt sich die zusätzliche Verwendung eines Lösungsmittels aus der Gruppe der niedrigsiedenden Aromaten, Alkylaromaten oder Ester.

Vorzugsweise benutzt man die Monomerkomponente II gleichzeitig als Reaktionsmedium, d.h. man setzt die Verbindung III in Anteilen von ca. 10 - 30 Gew.-% in den Monomeren der Formel II ein. Zweckmäßig verwendet man gleichzeitig an sich bekannte Stabilisatoren, beispielsweise vom Typ der sterisch gehinderten Phenole wie z.B. 4-Methyl-2,6-di-tert.butylphenol oder der aromatischen Diamine wie o-Phenylendiamin (vg. Ullmanns Encyclopädie der Techn. Chemie, 4. Auflage Bd. 15, S. 260 VC 1978) an. Als Anhalt seien 0,01 - 0,5 Gew.-% bezogen auf die Verbindungen der Formel II genannt.

Im allgemeinen verfährt man so, daß man das Reaktionsgemisch solange zum Sieden erhitzt, bis kein Wasser mehr abgeschieden wird. Zweckmäßig gibt man dann den Umesterungskatalysator, vorzugsweise einen Orthotitansäureester (vgl. GB-A 960 005, GB-A 962 928), insbesondere der Formel VII

Ti(OR₄)₄ VII

worin R₄ für einen Alkylrest mit 1 bis 20 Kohlenstoffatomen (bevorzugt 1 - 6 Kohlenstoffatomen) steht, insbesondere Isopropyl-Titanat in Mengen von 0,1 bis 5 Gew.-%, vorzugsweise 0,5 bis 1,5 Gew.-% bezogen auf die Verbindung II ein.

Anschließend erhitzt man zweckmäßig wiederum einige Stunden, beispielsweise ca. 3 Stunden zum Sieden, läßt dann auf ca. 85 Grad C abkühlen und tropft eine geringe Menge Wasser, etwa das ca. 1,7-fache des eingesetzten Katalysators zu.

Der Ansatz wird nach dem Erkalten zweckmäßig filtriert, beispielsweise über einen Druckfilter und so von entstandenen Niederschlägen befreit. Man kann nun das klare farblose Filtrat z.B. am Reaktionsverdampfer bis zur Trockne einengen. Eine weitere Reinigung kann beispielsweise durch Lösen in einem geeigneten Lösungsmittel wie z.B. Aceton und durch Fällen mittels Eintropfen in eine größere Menge Wasser, etwa das vierfache des eingesetzten Monomeren II bewirkt werden.

Man saugt das abgeschiedene Material ab und kann es z.B. im Umluft-Trockenschrank etwa bei ca. 60 Grad C trocknen.

### C. Verwendung der Makromonomeren der Formel I zur Herstellung von Kammpolymeren (fällt nicht unter die beanspruchte Erfindung)

Zur Synthese der Kammpolymeren verwendet man zweckmäßig einen mit Schutzgaseinleitung, Kühlmantel, Thermometer und Rührwiderstandsmesser ausgestatteten Rührreaktor, wobei unter einem inerten Schutzgas wie Argon gearbeitet werden sollte.

Man gibt dazu 10 - 90 Gewichtsteile (bevorzugt 15 - 50, besonders bevorzugt 20 -40) der Monomeren der Formel I mit ca. 90 - 10 (bevorzugt 50 - 85, besonders bevorzugt 90 - 60) Gewichtsteile eines Monomeren der Formel VI in einem geeigneten inerten Lösungsmittel wie z.B. Butylacetat und erwärmt bis zur Zerfallstemperatur des Initiators IN, bei Verwendung von tert.Butylperneodecanoat z.B. auf 50 Grad C

Man gibt nun den Initiator IN vorzugsweise in ca. 75 %-iger Lösung in einem inerten Lösungsmittel auf einmal oder in Portionen zu. Man hält die Temperatur im Reaktor durch Kühlen unter 60 Grad C. Zum Verlauf der Polymerisation vgl. DE-A 39 02 653. Nach insgesamt ca. 8 Stunden Polymerisationsdauer wird durch zweckmäßige Zugabe eines Stabilisators vom HALS-Typ die Polymerisation beendet, worauf das Polymer durch Ausfällen, beispielsweise mit einer größeren Menge Methanol oder alternativ durch Entgasung im Extruder isoliert werden kann.

Die folgenden Beispiele dienen zur Erläuterung der Erfindung.

### BEISPIELE

### A. Synthese der Hydroxylgruppenterminierten Polymethylmethacrylate der Formel III

### Beispiel A-1:

200 g Methylmethacrylat werden in einem 2 1 Reaktor mit Kühlmantel, Rührer, Rückflußkühler, Tropftrichter und Thermometer auf 90 Grad C erwärmt. Zur Inertiaierung wird Argon eingeleitet.

Wenn die Innentemperatur 90 Grad C erreicht hat, werden 4 g Mercaptoethanol zugesetzt. Danach wird die Polymerisation durch Zugabe von 0,04 g t-Butylperneodecanoat (75 %-ig in Aliphaten) gelöst in 10 g Methylmethacrylat gestartet.

Die Polymerisation beginnt sofort, dabei steigt die Temperatur innerhalb von 5 Minutn im Reaktionsgefäß auf ca. 95 Grad C - 98 Grad C, wenn die Innentemperatur wieder fällt, werden gleichzeitig aus 2 verschiedenen Tropftrichtern innerhalb von 4 Stunden zudosiert:

| | |
|---|---|
| 0,4 g t-Butylperneodecanoat gelöst in 780,0 g Methylmethacrylat | Tropftrichter 1 |
| 16,0 g Mercaptoethanol | Tropftrichter 2 |

Die Temperatur im Reaktor wird dabei im Bereich von 94 - 98 Grad C gehalten. Danach wird 20 Minuten bei ca. 96 - 98 Grad C gehalten.

Danach wird eine Lösung von 0,5 g t-Butylperoxyneodecanoat in 250 g Toluol innerhalb von 4 Stunden bei 96 - 98 Grad C zudosiert (Endpolymerisation). Schließlich werden 0,02 g Tinuvin ® 770 in 250 g Toluol zur Stabilisierung zugesetzt, es wird auf Raumtemperatur abgekühlt und als Feststoff durch Ausfällen in Methanol gewonnen.

Beispielsweise erhält man 660 g eines farblosen, spröden Polymeren.
J = 11,3 ml/g.

### B. Herstellung der Methacryloyl-terminierten Macromonomeren der Formel I

### Beispiele B-1 bis B-3

### Verwendete Apparatur:

2-1-Vierhalsrundkolben mit Rührer, Thermometer, Rückflußkühler mit Wasserabscheider, Siedekapillare zum Einleiten getrockneter Luft.

### Durchführung:

In der oben beschriebenen Apparatur löst man die angegebene Menge an Hydroxy-terminiertem Polymethylmethacrylat der Formel III gemäß Beispiel A (vgl. Tabelle 1) zusammen mit 1 g 4-Methyl-2,6-di-tert-butylphenol in 1 000 g des angegebenen (Meth)acrylsäureesters und erhitzt so lange zum Sieden, bis kein Wasser mehr abgeschieden wird. Anschließend werden 12 ml Isopropyltitanat zugegeben. Man erhitzt weitere 3 Stunden zum Sieden, läßt dann auf 88 Grad C abkühlen und tropft 20 ml Wasser zu. Der völlig erkaltete Rückstand wird durch Filtration über einen Druckfilter (Filterschicht Seitz S 500) von dem entstandenen Niederschlag befreit. Das klare, farblose Filtrat wird mit Hilfe eines Rotationsverdampfers bis zur Tockene eingeengt. Den entstandenen Rückstand löst man in 700 ml Aceton und fällt das Makromonomere der Formel I durch Eintropfen in 4 l Wasser aus. Das gefällte Material wird abfiltriert und im Umlufttrockenschrank bei 60 Grad C getrocknet.

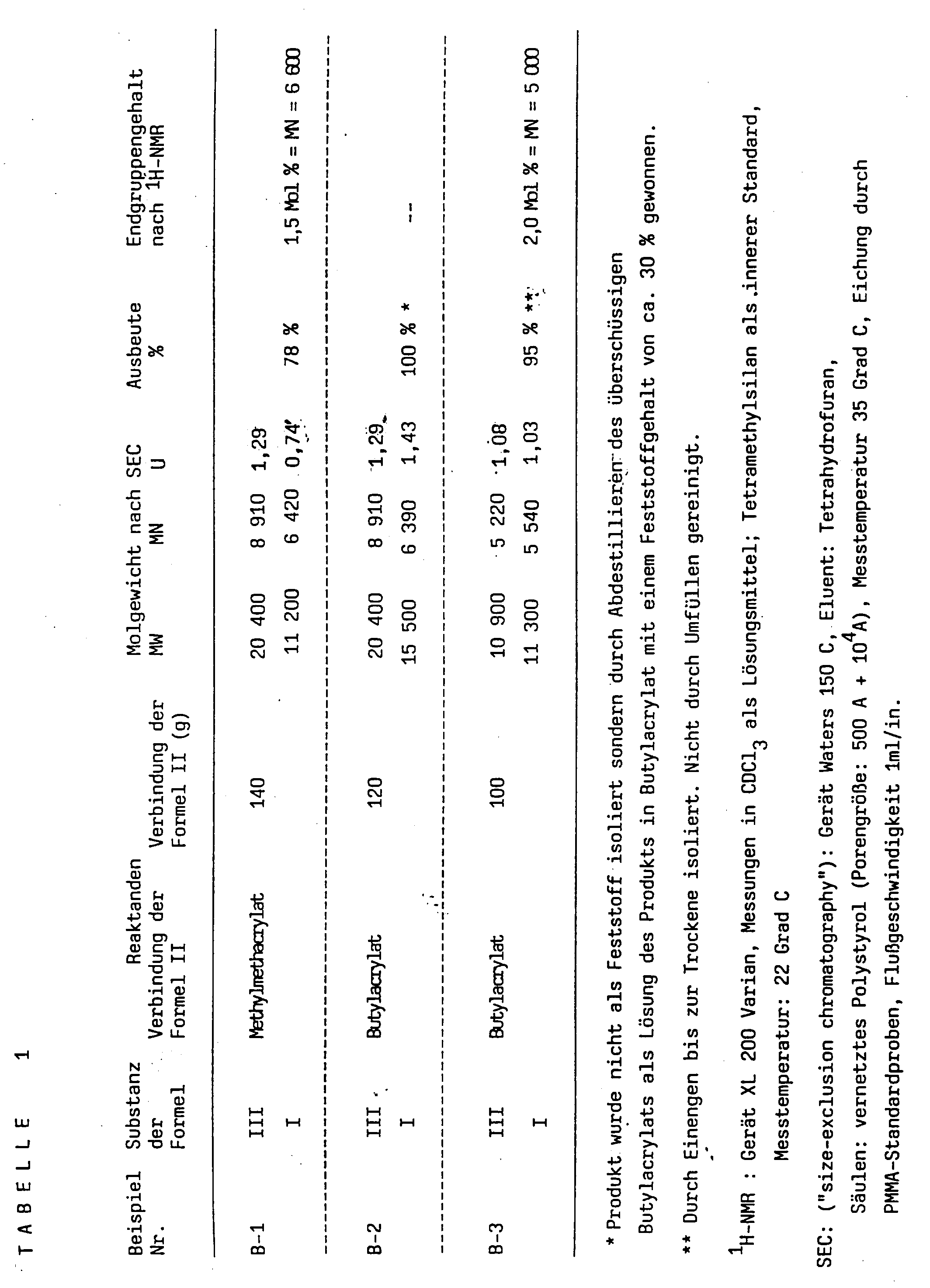

### C. Verwendung der Makromonomeren der Formel I zur Synthese von Kammpolymeren (fällt nicht unter die beanspruchte Erfindung)

### Beispiel C-1

In einem Rührreaktor mit Schutzgaseinleitung, Kühlmantel und Rührwiderstandsmessung werden unter Argon

| | |
|---|---|
| 96 g | Makromonomeres gemäß Beispiel B-1 |
| 224 g | Butylacrylat |
| 480 g | Butylacetat |

vorgelegt und auf 51 Grad C erwärmt.

Es werden 0,1 g einer 75 %igen Lösung t-Butylperoxyneodecanoat (als Initiator) in Aliphaten zur Initiierung zugesetzt, nach 3 1/2 Stunden wurden weitere 0,2 g Initiator zugesetzt.

Die Temperatur im Reaktor wird durch Kühlen unter 60 Grad C gehalten. Nach insgesamt 8 Stunden Polymerisationsdauer wird durch Zugabe von 0,1 g Tinuvin 770 in 500 g Butylacetat die Polymerisation beendet und das Polymere durch Ausfällen in 15 1 Methanol isoliert.

Alternativ kann das Polymere durch Entgasung mittels Extruder isoliert werden. Nach dem Trocknen erhält man ein klares, dehnbares, zähes Polymer.
J = 331 ml/g

Das Polymere hat eine Reißspannung δ_{R} = 11,5 MPa und eine Reißdehnung von 433 %. (ε_{R}).

### Beispiel C2

327 g der Makromonomerlösung in Butylacrylat gemäß Beispiel B-2 bestehend aus 30 Gew.-% Makromonomeren und 70 Gew.-% Butylacrylat werden mit
560 g Butylacetat verdünnt und unter Argon auf 51 Grad C erwärmt.

Die Polymerisation wird durch wiederholte Zugabe von t-Butylperneodecanoat (75 %-ig in Aliphaten) (0,2g bei Beginn, 0,2 g nach 40 min, 0,2 g nach 60 min und 0,2 g nach 80 min). initiiert. Nach 3 Stunden erreicht die Innentemperatur ca. 60 Grad C.

Nach 7 Stunden ist die Innentemperatur wieder auf 53 Grad C gefallen, der Rührwiderstand ist deutlich angestiegen.

Zur Beendigung der Polymerisation werden 0,1 g Tinuvin ^{R} 770 in 500 g Butylacetat zugesezt.

Zur Fällung in Methanol wird mit weitren 500 g Butylacetat verdünnt.

Man erhält eine leicht gelbliches, klares zähes Polmyerisat.
J = 289 ml/g, δ_{R} = 9,4 MPa, ε_{R} = 590 %.

## Patentansprüche

1. Verfahren zur Herstellung von Makromonomeren der allgemeinen Formel I 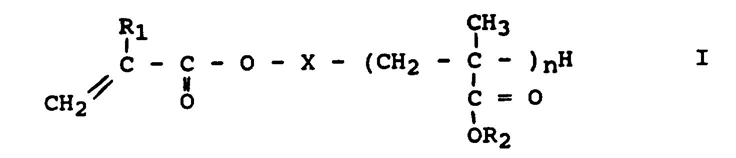 worin
R₁ für Wasserstoff oder Methyl
X für einen biradikalischen Rest und
R₂ für einen Alkylrest mit 1 bis 40 Kohlenstoffatomen steht, mit der Maßgabe, daß n so gemessen ist, daß das Molekulargewicht der Makromonomeren I im Bereich 500 bis 100 000 Dalton liegt,
dadurch gekennzeichnet, daß man monomere Ester der Formel II 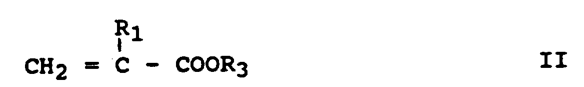 worin
R₃ für einen Alkylrest mit 1 bis 8 Kohlenstoffatomen steht mit einem hydroxylgruppen-terminierten Polyalkylmethacrylat der Formel III 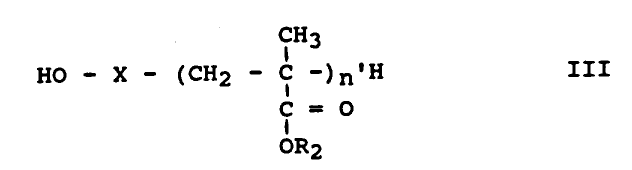
worin
X u. R₂ die oben bezeichneten Bedeutungen besitzen mit der Maßgabe, daß n'mit n übereinstimmt unter Abspaltung des Alkohols HOR₃
umestert, wobei die Verbindung der Formel I gebildet wird.

2. Verfahren gemäß Anspruch 1, dadurch gekennzeichnet, daß man als Umesterungskatalysator einen Ortho-Titansäureester einsetzt.

3. Verfahren gemäß Anspruch 2, dadurch gekennzeichnet, daß man als Umesterungskatalysator Isopropyltitanat einsetzt.

## Claims

1. A process for preparing macromonomers of general formula I 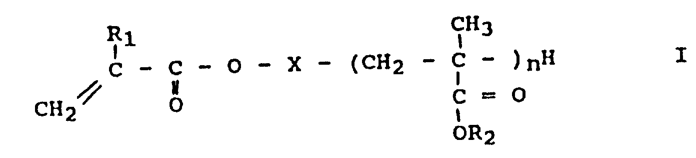 wherein
R₁ represents hydrogen or methyl
X represents a biradical group and
R₂ represents an alkyl group having 1 to 40 carbon atoms, with the proviso that n is such that the molecular weight of the macromonomers I is within the range of 500 to 100,000 Dalton,
characterised in that monomer esters of formula II 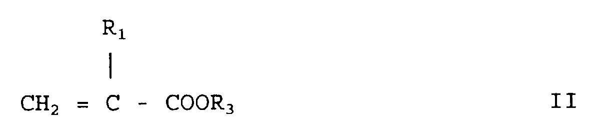 wherein
R₃ represents an alkyl group having 1 to 8 carbon atoms are transesterified with a hydroxyl group terminated polyalkylmethacrylate of formula III, 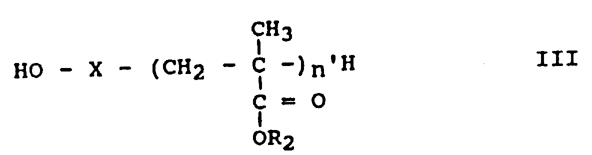
wherein
X and R₂ have the above meanings with the proviso that n' conforms with n under cleavage of alcohol HOR₃
whilst the compound of formula I is formed.

2. A process according to claim 1, characterised in that an orthotitanic acid ester is used as transesterification catalyst.

3. A process according to claim 2, characterised in that isopropyltitanate is used as transesterification catalyst.

## Revendications

1. Procédé de préparation de macromonomères de formule générale I 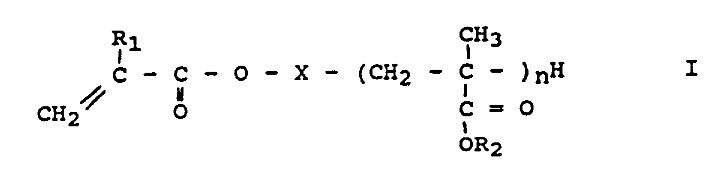 dans laquelle
R₁ est mis pour un atome d'hydrogène ou un reste méthyle,
X est mis pour un reste biradicalaire et
R₂ est mis pour un reste alkyle à 1-40 atomes de carbone, étant spécifié que n est choisi de sorte que le poids moléculaire des macromonomères I se situe dans la gamme de 500 à 100 000 daltons,
caractérisé en ce que l'on transestérifie des esters monomères de formule II 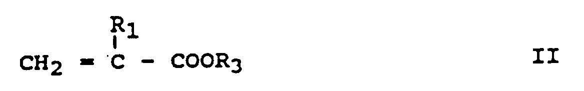 dans laquelle
R₃ est mis pour un reste alkyle à 1-8 atomes de carbone, avec un polyméthacrylate d'alkyle à groupement terminal hydroxy, de formule III 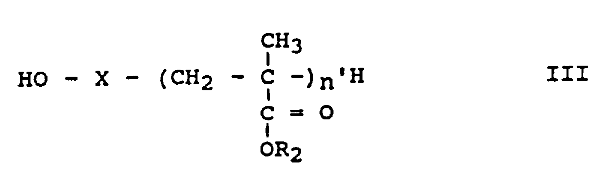 dans laquelle X et R₂ ont les significations données ci-dessus, étant spécifié que n' correspond à n,
avec élimination de l'alcool HOR₃, ce qui donne le composé de formule I.

2. Procédé selon la revendication 1, caractérisé en ce que l'on utilise, comme catalyseur de transestérification, un ester d'acide orthotitanique.

3. Procédé selon la revendication 2, caractérisé en ce qye l'on utilise, comme catalyseur de transestérification, du titanate d'isopropyle.
